# EUROPEAN PATENT APPLICATION

(11) **EP 4 744 793 A1**
(43) Date of publication of application: **20.05.2026**
(21) Application number: 24213390.8
(22) Date of filing: 15.11.2024
(51) Int. Cl.: B08B 9/027, B08B 17/02, C02F 1/48, F16L 3/10

(54) **ELECTRICAL ANTI-FOULING DEVICE**

(71) Applicant: Hydro-Service Schweiz GmbH, 5610 Wohlen (CH)
(72) Inventor: Ekberg, Peter, Domsten (SE); Lindwall, Per, Cotignac (FR)
(74) Representative: AWA Sweden AB

(57) **Abstract**

The present invention relates to an electrical anti-fouling (EAF) device (10) for reducing fouling of an interior surface of a pipe (20). the EAF device (10) comprises: a first body (100) comprising an electromagnetic coil (120), wherein a core (124) of the electromagnetic coil (120) comprises a first end portion (126a) and a second end portion (126b); and a second body (200) housing an elongated ferrimagnetic element (220), wherein in an assembled state of the EAF device (10), the core (124) and the elongated ferrimagnetic element (220) forms a magnetic circuit; wherein, in the assembled state, a through-hole (40) is formed in the EAF device (10), the through-hole (40) being configured to receive the pipe (20), wherein the through-hole (40) is provided with engagement means (42) configured to receive and releasably retain a pipe clamping element (50), wherein a clamping surface (52) of the pipe clamping element (50) is configured to cooperate with a further clamping surface (92) of the EAF device (10) so as to clampingly engage the pipe (20) such that the EAF device (10) is attached thereto, wherein the pipe clamping element (50) is arrangeable at a plurality of positions in relation to the through-hole forming surface (140) of the first body (100) such that the EAF device (10) is attachable to pipes (20) of various diameters.

## Description

### FIELD OF INVENTION

The present inventive concept relates, in general, to an electrical anti-fouling (EAF) device for reducing fouling of an interior surface of a pipe.

### BACKGROUND OF THE INVENTION

Fouling, the accumulation of unwanted material on solid surfaces, is a long standing challenge in pipes that transport liquids and biproducts, such as water pipes and sewage pipes. Fouling can consist of both organic and inorganic substances. One form of fouling originates from hard water comprising high concentrations of minerals, wherein the minerals cause fouling on the interior surface of the pipes.

Traditionally water softeners have been used to reduce fouling due to minerals in the water transported in the pipe. However the use of water softeners may have negative ecological impact, it is costly, often regulated by laws, and involves a lot of work as it requires a section of pipe to be removed and replaced by a device.

The non-chemical electrical anti-fouling (EAF) technology has become increasingly available for various applications. EAF devices impart electromagnetic fields into the water, changing the way minerals in the water precipitate.

However, there still remain various aspects of EAF devices that are in need of improvement. For example, there is still a need for improving the effectiveness of EAF devices in reducing fouling and the ease of installation and use of EAF devices.

### SUMMARY OF THE INVENTION

It is an objective of the present inventive concept to enable an electrical anti-fouling (EAF) device with improved fouling reduction of an interior surface of a pipe.

It is a further objective of the present inventive concept to enable an EAF device that facilitates assembling of the EAF device.

These and other objectives of the inventive concept are at least partly met by the invention as defined in the independent claims. Preferred embodiments are set out in the dependent claims.

More specifically, there is provided according to a first aspect of the present invention, an electrical anti-fouling (EAF) device for reducing fouling of an interior surface of a pipe, the EAF device comprising:
a first body comprising an electromagnetic coil, the electromagnetic coil comprising an electrically conductive winding wound around a core of a ferrimagnetic material, the electromagnetic coil being configured to be electrically coupled to a current source configured to provide the electromagnetic coil with an alternating current (AC), wherein the core of the electromagnetic coil comprises a first end portion and a second end portion; and
a second body housing an elongated ferrimagnetic element, the second body being configured to be connected to the first body such that a first surface portion of the elongated ferrimagnetic element is arranged against the first end portion of the core of the electromagnetic coil, and a second surface portion of the elongated ferrimagnetic element is arranged against the second end portion of the core of the electromagnetic coil such that, in an assembled state of the EAF device, the core and the elongated ferrimagnetic element forms a magnetic circuit;
wherein, in the assembled state, a through-hole is formed in the EAF device, the through-hole being defined by a through-hole forming surface of the first body and a through-hole forming surface of the second body, the through-hole being configured to receive the pipe, wherein the through-hole is provided with engagement means configured to receive and releasably retain a pipe clamping element, wherein a clamping surface of the pipe clamping element is configured to cooperate with a further clamping surface of the EAF device so as to clampingly engage the pipe such that the EAF device is attached thereto,
wherein the pipe clamping element is arrangeable at a plurality of positions in relation to the through-hole forming surface of the first body such that the EAF device is attachable to pipes of various diameters.

Since the pipe clamping element is arrangeable at a plurality of positions in relation to the through-hole forming surface of the first body, a distance between the clamping surface of the pipe clamping element and the further pipe clamping surface of the EAF device can be adjusted. Thereby the EAF device can be attached to pipes of larger or smaller diameters. That is, the EAF device is attachable to pipes within a range of different diameters.

The AC current in the winding wound around the core may induce a time-varying magnetic field inside the core of the electromagnetic coil extending through the magnetic circuit. The time-varying magnetic field of the magnetic circuit may induce a time-varying electric field in the pipe.

The time-varying electric field in the pipe reduces fouling of the interior surface of the pipe as well as the liquid inside the pipe. The time-varying electric field provides energy in the form of molecular agitation to charged mineral ions of various compounds, for example calcium ions and bicarbonate ions. The energy provided affects the crystallization of the various compounds such that the various compounds crystallize in shapes that are more easily removed by turbulence and the flow of the liquid in the pipe. For example, the time-varying electric field causes calcium carbonate (CaCOs) to crystalize in calcite form instead of aragonite form, calcite form being a form that easily adheres to the interior surface of the pipe and is hard to remove. Thereby the fouling, sometimes referred to as calcification, of the pipe is reduced.

The electrically conductive winding being wound around the core implies that the electrically conductive winding forms at least one partial loop around the core such that the electrically conductive winding at least partially encircles the core. In a preferred embodiment, the electrically conductive winding forms a plurality of loops around the core.

The ferrimagnetic material of the core and a ferrimagnetic material of the elongated ferrimagnetic element may be non-electrically conductive. Non-electrically conductive implies none or a low electrical conductivity. Low electrical conductivity may imply an electrical conductivity for example below 10 mS/m, preferably below 2mS/m.

The electromagnetic coil being coupled to the current source implies that the electrically conductive winding is electrically connected to the current source such that a current may be applied through the electrically conductive winding by the current source.

The through-hole of the EAF device is defined by a through-hole forming surface of the first body and a through-hole forming surface of the second body. That is, the though-hole forming surface of the first body and the second body will be directed towards the pipe when the EAF device is arranged on the pipe. The EAF device will consequently, in an assembled state, be arranged around the pipe, such that the magnetic circuit formed by the core and the elongated ferrimagnetic element encloses the pipe. The pipe in which to reduce fouling may be any type of pipe through which a liquid is transported. The liquid may be for example water.

That a clamping surface of the pipe clamping element being configured to cooperate with a further clamping surface of the EAF device so as to clampingly engage the pipe is to be understood as the pipe being clamped between a clamping surface of the EAF device and a clamping surface of the pipe clamping element. That is, both the pipe clamping element and a further clamping surface of the EAF device participates in clampingly engaging the pipe.

Since the engagement means is configured to receive and releasably retain a pipe clamping element, the pipe clamping element is consequently configured to be attached to the EAF device by interaction with the engagement means. However, the interaction is such that the pipe clamping element can be detached from the engagement means as well. This facilitates the installation and the disassembling of the EAF device.

The first body and the second body may comprise connection means arranged to removably connect the first body and the second body. The connection means may comprise for example snap fit connections.

The first body and the electromagnetic coil may be substantially U-shaped. U-shaped implies that the first body and the electromagnetic coil is bent such that a surface of the first end portion and a surface of the second end portion of the core at least partially faces the same direction.

The further clamping surface may be one of the through-hole forming surface of the first body, the through-hole forming surface of the second body and a surface portion of a further pipe clamping element.

That is, the pipe may be clamped between the clamping surface of the pipe clamping element and the through-hole forming surface of the first body, or the through-hole forming surface of the second body, or a surface portion of a further pipe clamping element.

The further clamping surface may be the surface portion of the further pipe clamping element and the engagement means may further be configured to receive and releasably retain the further pipe clamping element.

That is, the pipe may be clamped between the clamping surface of the pipe clamping element and the further clamping surface of the further pipe clamping element. Thus, the EAF device may comprise two pipe clamping elements which cooperate with each other to attach the EAF device to the pipe. Thereby, the EAF device may easily be adjusted to better fit the dimension of the pipe.

At least one of the clamping surface and the further clamping surface is substantially U-shaped as seen in a direction along a longitudinal axis of the through-hole.

In other words, the clamping surface, the further clamping surface, or both the clamping surface and the further clamping surface, may be substantially U-shaped. A longitudinal axis of the through-hole is to be understood as an axis along the main extension of the through-hole, i.e. extending from one side of the through-hole to the other side of the through-hole. Hereby, the clamping surface and the further clamping surface may be shaped so as to increase the contact surface with the pipe. This may result in a more secure and stable fastening of the EAF device to the pipe. Further, the clamping surface may be curved such that the clamping surface is in full contact with a pipe of a first dimension.

At least one of the clamping surface and the further clamping surface is provided with at least one respective friction increasing structure.

That is, the friction between the pipe and at least one of the clamping surface and the further clamping surface may be increased by the friction increasing structure. Thereby the risk that the EAF device slides, is shifted, or in other ways gets displaced after installation is reduced.

The friction increasing structure may include at least one flexing element, and the at least one flexing element may be arranged on and extending from the respective clamping surface or the further clamping surface. Here, the at least one flexing element may be configured such that when the clamping surface and the further clamping surface is clampingly engaging the pipe, the at least one flexing element is biased by and arranged to press against the pipe.

That is, the flexing element may be a spring-like protrusion that will press against the pipe when the EAF device is installed on the pipe. When the EAF device is installed on a pipe with a first diameter, the flexing element may be pressed down towards the clamping surface or the further clamping surface. The flexing element may also increase the contact surface between the clamping surface and a pipe of a second diameter, the second diameter being smaller than the first diameter.

The friction increasing structure may include a coating, such as a rubber layer.

The coating may increase the friction between the EAF device and the pipe, further reducing the risk of the EAF device getting displaced after installation.

The pipe clamping element may comprise one of indentations and protrusions, the indentations or protrusions being arranged substantially transverse to a longitudinal axis of the through-hole, and the engagement means may comprise a complementary indentation or protrusion.

That is, the pipe clamping element may comprise protrusions, while the engagement means comprise a complementary indentation. Alternatively, the pipe clamping element may comprise indentations, while the engagement means comprise a complementary protrusion. The indentations or protrusions being arranged substantially transverse to a longitudinal axis of the through-hole enables the clamping element to clamp the pipe regardless of the dimensions of the pipe.

The engagement means may comprise one of indentations and protrusions, the indentations or protrusions being arranged substantially transverse to a longitudinal axis of the through-hole, and wherein the pipe clamping element comprises a complementary indentation or protrusion.

That is, the engagement means may comprise a number of protrusions, while the pipe clamping element may comprise a complementary indentation. Alternatively, the engagement means may comprise indentations, while the pipe clamping element comprise a complementary protrusion. The indentations or protrusions being arranged substantially transverse to a longitudinal axis of the through-hole enables the clamping element to clamp the pipe regardless of the dimensions of the pipe.

It is to be understood that the engagement means and the pipe clamping element may be configured in many different ways with one or a plurality of indentations, or alternatively, one or a plurality of protrusions.

The engagement means may comprise a plurality of grooves extending substantially parallel with each other and extending along a longitudinal axis of the through-hole.

That is, the pipe clamping element may be configured to interact with the grooves in order to attach the EAF device to the pipe.

The grooves may be configured to receive the pipe clamping element in a direction transverse to the extension of the grooves and to release the pipe clamping element in a direction along the extension of the grooves.

That is, the EAF device may be fastened to the pipe by pushing the pipe clamping element towards the further clamping surface, such that the pipe clamping element interacts with the grooves. The EAF device can be disassembled by pressing the EAF device in a direction along the grooves, such that the pipe clamping element slide along the grooves until the pipe clamping element separates from the engagement means.

The first body and/or the second body may comprise a respective metal housing.

However, it is to be understood that the first body and/or the second body may comprise other materials as well such as polymers, etc.

The metal housing of the first body may protect the EAF device against various forms of abrasion and improve its rigidness and thereby its lifetime.

The electromagnetic coil may be electrically insulated from the metal housing of the first body. For example, portions of the first body that are in contact with the electromagnetic coil may be coated in an electrically insulated material; the first body may comprise a holder for the electromagnetic coil, wherein a material of the holder may be the electrically insulating material; or the electromagnetic coil may be at least partially coated in the electrically insulating material. The electrically insulating material may for example be a polymer.

Electrically insulating the electromagnetic coil from the metal housing of the first body ensures that no or little current may flow between the electromagnetic coil and the metal housing of the first body. Said current flow may be a source of power loss in the EAF device and it is therefore desirable to minimize said current flow.

Further, the elongated ferrimagnetic element may be electrically insulated from the outer metal housing of the second body.

Electrically insulating the elongated ferrimagnetic element from the metal housing of the second body ensures that no or little current may flow between the elongated ferrimagnetic element and the metal housing of the second body. Current flowing through the magnetic circuit may be a source of power loss in the EAF device and it is therefore desirable to minimize said current flow.

In addition, the insulation of the elongated ferrimagnetic element and/or the ferrimagnetic material of the coil may reduce electrostriction effects which otherwise may cause audible noise.

The metal housing of the first body may comprise a slit-shaped opening, the slit-shaped opening being arranged in a portion of the through-hole forming surface.

Hereby, the housing does not fully encircle the core of the electromagnetic coil as seen in a cross-section transverse to an extension of the core from the first end to the second end thereof. Similarly, the metal housing of the second body may not fully encircle the core of the electromagnetic core of the electromagnetic coil or the elongated ferrimagnetic element as seen in a cross-sectional view, wherein the cross-section has the same extension as the longitudinal axis of the through-hole.

Thus, the slit-shaped opening reduces the risk that the metal housing forms a closed electrical circuit such that a magnetic field of the core may induce an electrical current in the metal housing, thereby negatively impacting the functionality of the EAF device.

The elongated ferrimagnetic element and/or the electromagnetic coil may be at least partially enclosed by a vibration absorbing material.

The vibration absorbing material may be any material that at least partially reduces vibrations of the elongated ferrimagnetic element and/or the electromagnetic coil and at least partially reduces audio noise related to said vibrations.

For example, a holder of the electromagnetic coil may comprise the vibration absorbing material. Alternatively, the vibration absorbing material may be the same as the electrically insulating material that electrically insulates the elongated ferrimagnetic element from the outer metal housing of the second body and/or the electrically insulating material that electrically insulates the electromagnetic coil from the metal housing of the first body.

The vibration absorbing material may reduce vibrations and audio noise originating from the elongated ferrimagnetic element and/or the electromagnetic coil, for example due to electrostriction effects.

The current source may be configured to provide the electromagnetic coil with high-frequency AC.

The high-frequency AC may for example refer to a frequency above 10 kHz, preferably above 100kHz, and more preferably above 160 kHz.

The high-frequency AC may result in a high-frequency electric field generated in the pipe. The high-frequency electric field may improve the efficiency of the EAF device in removing fouling of the interior surface of the pipe.

The current source may be configured to provide to the electromagnetic coil with a plurality of AC pulse trains.

Each pulse train may comprise a plurality of oscillations and span over a pulse time. During the pulse time, the amplitude of the AC current may vary, for example the amplitude of the AC current may monotonically decrease. Each pulse train may be separated in time by a separation time. In other words, a first pulse train is provided for the pulse time and once the separation time has passed since the first pulse train was provided, a second pulse train is provided, and so on for further pulse trains, resulting in a series of pulse trains.

It is a realization that providing the AC current as the plurality of pulse trains may improve the efficiency of the EAF device in removing fouling of the interior surface of the pipe.

### BRIEF DESCRIPTION OF THE DRAWINGS

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 is a perspective view of the EAF device according to the first aspect of the invention;
Fig. 2 is a top view of a cross section of the EAF device in Fig. 1;
Fig. 3 is a top view of the EAF device with a pipe clamping element and a further pipe clamping element;
Fig. 4 is a top view of the EAF device with a pipe clamping element;
Fig. 5 is a perspective view of a pipe clamping element;
Fig. 6 is a perspective view of the EAF device with grooves;
Fig. 7 is a perspective view of the EAF device in a disassembled state.

### DETAILED DESCRIPTION

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

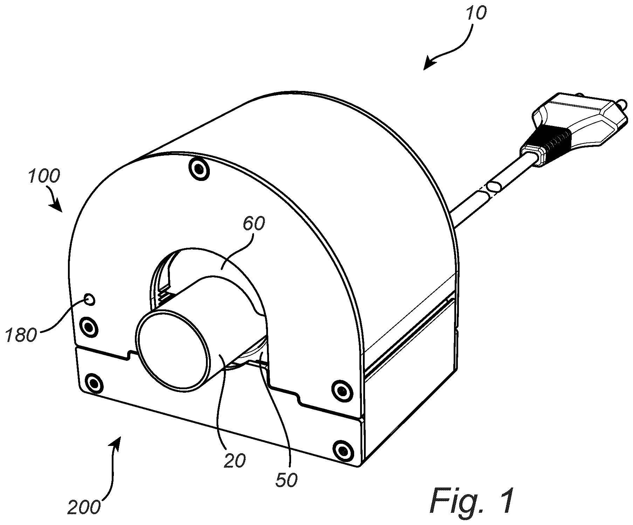

Fig. 1 shows an EAF device 10 for reducing fouling of an interior surface of a pipe 20, according to the first aspect of the invention. The EAF device 10 comprises a first body 100 and a second body 200. The first body 100 and the second body 200 are arranged such that the EAF device 10 encloses the pipe 20. A pipe clamping element 50 and a further pipe clamping element 60 is arranged to clamp the pipe 20, thereby fastening the EAF device 10 to the pipe 20. In Fig. 1, the first body comprises a light indicator 180 which indicates if the EAF device 10 is active or inactive, i.e. if the EAF device 10 is turned on or off.

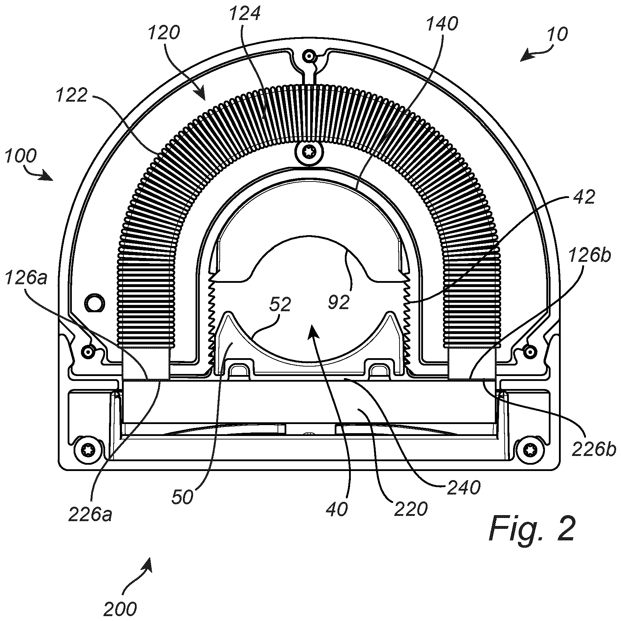

Referring to Fig. 2, the first body 100 houses an electromagnetic coil 120. The electromagnetic coil 120 comprises an electrically conductive winding 122. The winding 122 is wound around a core 124 of a ferrimagnetic material. The electromagnetic coil 120 is configured to be electrically coupled to a current source (not shown). The current source is configured to provide the electromagnetic coil 120 with an alternating current (AC). The core 124 of the electromagnetic coil 120 comprises a first end portion 126a and a second end portion 126b.

In Fig. 2 the electrically conductive winding 122 is wound around a major portion of an extension of the core 124. However, the winding 122 may be wound around a portion of the extension of the core 124, the portion of the extension of the core 124 being smaller than the major portion of the core 124. For example, the winding 122 may comprise a first winding portion arranged close to the first end portion 126a of the core 124 and a second winding portion arranged close to the second end portion 126b of the core 124. Thus, the winding 122 may comprise only one winding portion, or a plurality of winding portions.

In Fig. 2, the first body 100 and the electromagnetic coil 120 are substantially U-shaped. However, different shapes and variations of the first body 100 and the electromagnetic coil 120 are possible and should not be limited thereto.

The EAF device further comprises a second body 200 housing an elongated ferrimagnetic element 220. The second body 200 is configured to be connected to the first body 100 such that a first surface portion 226a of the elongated ferrimagnetic element 220 is arranged against the first end portion 126a of the core 124 of the electromagnetic coil 120. Similarly, a second surface portion 226b of the elongated ferrimagnetic element 220 is arranged against the second end portion 126b of the core 124 of the electromagnetic coil 120. Thereby, in an assembled state of the EAF device 10, the core 124 and the elongated ferrimagnetic element 220 are arranged such that a magnetic circuit is formed.

In the assembled state, a through-hole 40 is formed in the EAF device 10. The through-hole 40 is defined by a through-hole forming surface 140 of the first body 100 and a through-hole forming surface 240 of the second body 200. The through-hole 40 is configured to receive the pipe 20.

Further, the through-hole 40 is provided with engagement means 42. The engagement means 42 is configured to receive and releasably retain a pipe clamping element 50. A clamping surface 52 of the pipe clamping element 50 is configured to cooperate with a further clamping surface 92 of the EAF device 10 so as to clampingly engage the pipe 20 such that the EAF device 10 is attached thereto. In other words, the engagement means 42 are configured such that a pipe clamping element 50 is attachable to the EAF device 10, while the pipe clamping element 50 is fastened to the pipe 20 by a clamping force between the clamping surface 52 of the pipe clamping element 50 and a further clamping surface 92 of the EAF device 10.

The pipe clamping element 50 is arrangeable at a plurality of positions in relation to the through-hole forming surface 140 of the first body 100 such that the EAF device 10 is attachable to pipes 20 of various diameters.

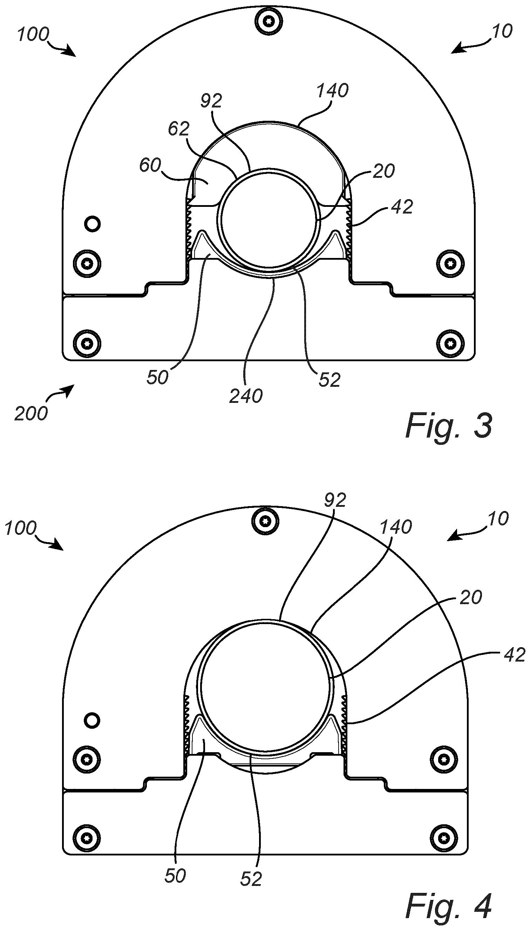

In Fig 3. The further clamping surface 92 is a surface portion 62 of a further pipe clamping element 60. The engagement means 42 is further configured to receive and releasably retain the further pipe clamping element 60. However, the further clamping surface 92 is not limited to being the surface portion 62 of a further pipe clamping element 60. For example, the further clamping surface 92 may be one of the through-hole forming surface 140 of the first body 100, the through-hole forming surface 240 of the second body 200 and a surface portion 62 of a further pipe clamping element 60.

Fig. 4 shows an EAF device where the further clamping surface 92 is the through-hole forming surface 140 of the first body 100. Here, both the clamping surface 52 and the further clamping surface 92 are substantially U-shaped as seen along a longitudinal axis of the through-hole. That is, the clamping surface 52 and the further clamping surface 92 are not flat surfaces. Instead, the surfaces are curved, shaped like an U. However, it should be noted that the clamping surface 52 and the further clamping surface 92 are not limited to being U-shaped, and none of the surfaces or only one of the surfaces may have this shape.

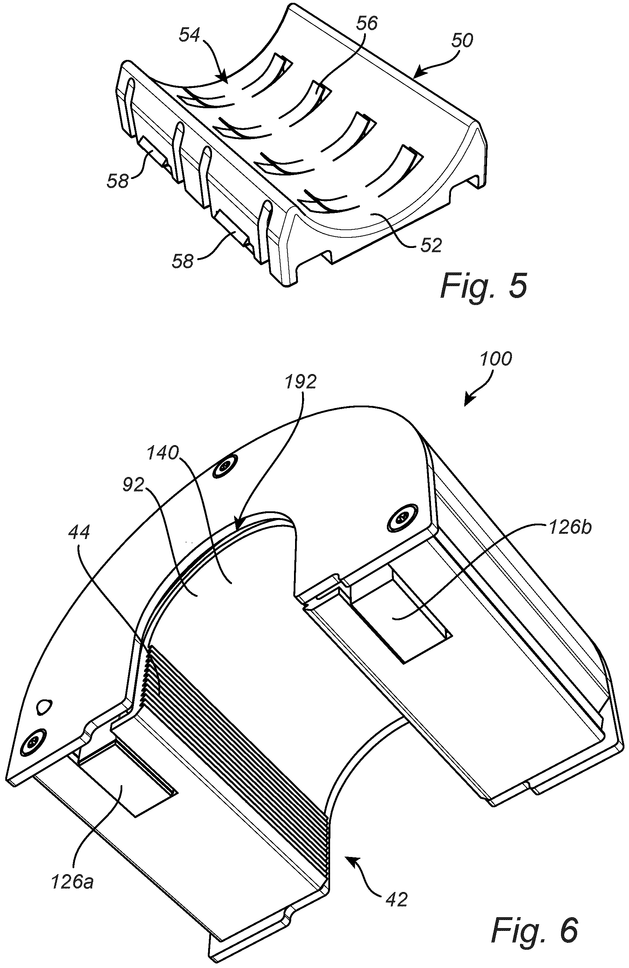

Fig. 5 shows a variant of a pipe clamping element 50 more in detail. Here, the pipe clamping element 50 is shaped like a cradle. Outer walls 58 of the pipe clamping element 50 are configured for engagement with the engagement means 42.

Here, the further clamping surface 52 is provided with a friction increasing structure 54. The friction increasing structure 54, includes eight flexing elements 56. However, it is to be understood that the friction increasing structure 54 may comprise any number of flexing elements 56.

The flexing elements 56 comprises a first portion fastened to the further clamping surface. The flexing element 56 further comprises a second portion which is movable in relation to the clamping surface 52.

The flexing elements 56 extends from the clamping surface 52 such that the second portion has a first distance from the clamping surface 52 in an unbiased state. When the flexing element 56 is biased, the second portion will have a second distance from the clamping surface 52, the second distance being shorter than the first distance. The bias of the flexing elements 56 will occur when the clamping surface 52 and the further clamping surface 92 is clampingly engaging the pipe 20. The pressure against the pipe 20 from the two pipe clamping elements will bias the flexing elements 56.

In other words, the flexing elements 56 are spring-like protrusions that will be biased towards the clamping surface 52 when the EAF device is assembled. The flexing elements 56 will increase the contact surface and the friction between the clamping surface 52 and the pipe 20.

In Fig. 5 the eight flexing elements 56 are arranged in pairs wherein the flexing elements 56 in each pair face each other. The pairs are arranged next to each other such that the flexing elements shape a second, smaller cradle on the clamping surface 52 of the cradle shaped pipe clamping element 50. However, it should be understood that several variants of flexing elements, and their arrangement are possible.

It should be understood that the friction increasing structure 54 also may be or include a coating, such as a rubber layer. The friction increasing structure 54 has here been explained in relation to the clamping element 50 and the clamping surface 52. However, the friction increasing structure as explained above is also applicable to the further clamping surface 92 of the EAF device 10.

Fig. 6 shows a variant of engagement means 42 of the EAF device 10 in more detail. Here, the engagement means 42 comprises a plurality of grooves 44. The grooves 44 extends substantially in parallel with each other and along a longitudinal axis of the through-hole 40.

The grooves 44 are configured to receive the pipe clamping element 50 in a direction transverse to the extension of the grooves 44. Further, the grooves are configured to release the pipe clamping element 50 in a direction along the extension of the grooves 44.

Thus, when the EAF device 10 is to be installed on the pipe 20, the first body 100 will be placed such that the pipe 20 is in contact with the further clamping surface 92. Thereafter, the pipe clamping element 50 is placed such that an engaging contact is established between the pipe clamping element and the grooves 44. That is, the pipe clamping element 50 is placed such that the outer walls 58 interact with the grooves 44. Thereafter, the pipe clamping element 50 is pushed in a direction transverse to the longitudinal axis of the through-hole 40, i.e. towards the pipe 20. That is, the outer walls 58 are flexibly restrained, i.e. releasably retained, such that the outer walls 58 may slide between grooves 44 when a big enough force is pushing the pipe clamping element 50 in such a direction. The pipe clamping element 50 is pushed towards the pipe 20 until the pipe 20 is clamped between the clamping surface 52 of the clamping element 50 and the further clamping surface 92 of the EAF device 10.

When the EAF device 10 is to be disassembled from the pipe 20, the pipe clamping element 50 is pushed in a direction along the grooves 40 until the pipe clamping element 50 separates from the grooves 42.

In Fig. 6, engagement means 42 in the form of grooves 44 is shown. However, a plurality of variations of engagement means 42 is possible. For example, the engagement means 42 may comprise one of indentations and protrusions. The indentations or protrusions may be arranged substantially transverse to a longitudinal axis of the through-hole 40. The pipe clamping element 50 may in such case comprise a complementary indentation or protrusion. Thereby the engagement means may receive and releasably retain the pipe clamping element 50. The arrangement of the indentations and protrusions also enables adjustment of the position of the pipe clamping element 50 such that the EAF device 10 may be attached to a number of pipes with various dimensions.

Alternatively, the pipe clamping element 50 may comprise one of indentations and protrusions. The indentations or protrusions may be arranged substantially transverse to a longitudinal axis of the through-hole 40, when the EAF device 10 is assembled. The engagement means 42 may in such case comprise a complementary indentation or protrusion.

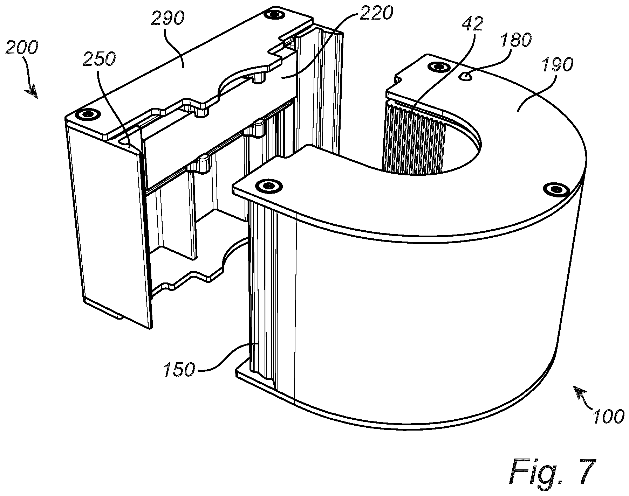

In Fig. 7, the first body 100 and the second body 200 comprises a respective housing 190, 290. Here, the housing 190 of the first body 100 and the housing 290 of the second body 200 is a metal housing. However, the housing 190, 290 of the EAF device 10 is not limited thereto. For example, only one of the second body 200 and the first body 100 may comprise a metal housing, while the other may comprise a housing made of another material. Alternatively, neither the second body 200 nor the first body 100 comprise a metal housing.

Referring to Fig. 6, the metal housing of the first body 100 comprises a slit-shaped opening 192. The slit-shaped opening 192 is arranged in a portion of the through-hole forming surface 140 of the first body 100.

Referring again to Fig. 7, the first body 100 and the second body 200 comprises respective connection means 150, 250 configured to removably connect the first body and the second body. Here the connection means 150, 250 comprise a protrusion 250 and corresponding receiving portion 150, forming a snap fit mechanism. When the second body 200 is snap fitted to the first body, the first surface portion 226a of the elongated ferrimagnetic element 220 is arranged against the first end portion 126a of the core 124 of the electromagnetic coil 120, and a second surface portion 226b of the elongated ferrimagnetic element 220 is arranged against the second end portion 126b of the core 124 of the electromagnetic coil 120. Thereby the core 124 and the elongated ferrimagnetic element 220 forms the magnetic circuit.

However, it should be understood that the connection means 150, 250 of the first body 100 and the second body 200 may consist of other fastening mechanisms than a snap fit mechanism. The fastening mechanism may be any fastening mechanism that allows the magnetic circuit to form, for example screws, clips, pins, etc.

Further, the current source is configured to provide the electromagnetic coil 120 with a high-frequency AC. In addition, the current source is configured to provide the electromagnetic coil 120 with a plurality of AC pulse trains.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An electrical anti-fouling (EAF) device (10) for reducing fouling of an interior surface of a pipe (20), the EAF device (10) comprising:
a first body (100) comprising an electromagnetic coil (120), the electromagnetic coil (120) comprising an electrically conductive winding (122) wound around a core (124) of a ferrimagnetic material, the electromagnetic coil (120) being configured to be electrically coupled to a current source configured to provide the electromagnetic coil (120) with an alternating current (AC), wherein the core (124) of the electromagnetic coil (120) comprises a first end portion (126a) and a second end portion (126b); and
a second body (200) housing an elongated ferrimagnetic element (220), the second body (200) being configured to be connected to the first body (100) such that a first surface portion (226a) of the elongated ferrimagnetic element (220) is arranged against the first end portion (126a) of the core (124) of the electromagnetic coil (120), and a second surface portion (226b) of the elongated ferrimagnetic element (220) is arranged against the second end portion (126b) of the core (124) of the electromagnetic coil (120) such that, in an assembled state of the EAF device (10), the core (124) and the elongated ferrimagnetic element (220) forms a magnetic circuit;
wherein, in the assembled state, a through-hole (40) is formed in the EAF device (10), the through-hole (40) being defined by a through-hole forming surface (140) of the first body (100) and a through-hole forming surface (240) of the second body (200), the through-hole (40) being configured to receive the pipe (20), wherein the through-hole (40) is provided with engagement means (42) configured to receive and releasably retain a pipe clamping element (50), wherein a clamping surface (52) of the pipe clamping element (50) is configured to cooperate with a further clamping surface (92) of the EAF device (10) so as to clampingly engage the pipe (20) such that the EAF device (10) is attached thereto; and
wherein the pipe clamping element (50) is arrangeable at a plurality of positions in relation to the through-hole forming surface (140) of the first body (100) such that the EAF device (10) is attachable to pipes (20) of various diameters.

2. The EAF device (10) according to claim 1, wherein the further clamping surface (92) is one of the through-hole forming surface (140) of the first body (100), the through-hole forming surface (240) of the second body (200) and a surface portion (62) of a further pipe clamping element (60).

3. The EAF device (10) according to claim 2, wherein the further clamping surface (92) is the surface portion (62) of the further pipe clamping element (60) and wherein the engagement means (42) is further configured to receive and releasably retain the further pipe clamping element (60).

4. The EAF device (10) according to any preceding claim, wherein at least one of the clamping surface (52) and the further clamping surface (92) is substantially U-shaped as seen in a direction along a longitudinal axis of the through-hole.

5. The EAF device (10) according to any preceding claim, wherein at least one of the clamping surface (52) and the further clamping surface (92) is provided with at least one respective friction increasing structure (54).

6. The EAF device (10) according to claim 5, wherein the friction increasing structure (54) includes at least one flexing element (56), and wherein the at least one flexing element (56) is arranged on and extending from the respective clamping surface (52) or the further clamping surface (92),
wherein the at least one flexing element (56) is configured such that when the clamping surface (52) and the further clamping surface (92) is clampingly engaging the pipe (20), the at least one flexing element (56) is biased by and arranged to press against the pipe (20).

7. The EAF device (10) according to claim 5, wherein the friction increasing structure includes a coating, such as a rubber layer.

8. The EAF device (10) according to any preceding claim, wherein the pipe clamping element (50) comprises one of indentations and protrusions, the indentations or protrusions being arranged substantially transverse to a longitudinal axis of the through-hole (40), and wherein the engagement means (42) comprises a complementary indentation or protrusion.

9. The EAF device (10) according to any of claims 1-7, wherein the engagement means (42) comprises one of indentations and protrusions, the indentations or protrusions being arranged substantially transverse to a longitudinal axis of the through-hole (40), and wherein the pipe clamping element (50) comprises a complementary indentation or protrusion.

10. The EAF device (10) according to any of claims 1-7, wherein the engagement means (42) comprises a plurality of grooves (44) extending substantially parallel with each other and extending along a longitudinal axis of the through-hole (40).

11. The EAF device (10) according to claim 10, wherein the grooves (44) are configured to receive the pipe clamping element (50) in a direction transverse to the extension of the grooves (44) and to release the pipe clamping element (50) in a direction along the extension of the grooves (50).

12. The EAF device (10) according to any preceding claim, wherein the first body (100) and/or the second body (200) comprises a respective metal housing (190, 290).

13. The EAF device (10) according to claim 14, wherein the metal housing (190) of the first body (100) comprises a slit-shaped opening (192), the slit-shaped opening (192) being arranged in a portion of the through-hole forming surface (140).

14. The EAF device (10) according to any one of the preceding claims,
wherein the current source is configured to provide the electromagnetic coil (120) with high-frequency AC.

15. The EAF device (10) according to claim 14, wherein the current source is configure to provide the electromagnetic coil (120) with a plurality of AC pulse trains.
